# EUROPEAN PATENT APPLICATION

(11) **EP 3 572 252 A1**
(43) Date of publication of application: **27.11.2019**
(21) Application number: 18741962.7
(22) Date of filing: 04.01.2018
(51) Int. Cl.: B60G 9/04, B60G 21/055

(54) **SUPPORT BEAM**

(30) Priority: 17.01.2017 JP 2017005991
(71) Applicant: Hino Motors, Ltd., Hino-shi, Tokyo 191-8660 (JP)
(72) Inventor: MATSUMOTO, Kouji, Hino-shi Tokyo 191-8660 (JP)
(74) Representative: D Young & Co LLP
(86) International application number: PCT/JP2018/000018
(87) International publication number: WO 2018/135306

(57) **Abstract**

The support beam includes a body part extending along a predetermined direction, and a protruding part protruding from an intermediate portion of the body part in the predetermined direction, in an orthogonal direction orthogonal to the predetermined direction. The body part has an axle housing support portion provided at the intermediate portion of the body part and used for supporting an axle housing, and a pair of suspension member connecting portions provided at one end portion and the other end portion of the body part in the predetermined direction and to be connected to a suspension member. The protruding part has a stabilizer member attaching portion to which a stabilizer member is to be attached. The stabilizer member attaching portion includes a bottom wall portion continuous with the body part and extending along the predetermined direction, a side wall portion continuous with the bottom wall portion and extending along a direction orthogonal to both the predetermined direction and the orthogonal direction, and a top wall portion continuous with the side wall portion and extending to face the bottom wall portion.

## Description

### Technical Field

An aspect of the present invention relates to a support beam for supporting an axle housing of a vehicle.

### Background Art

Patent Literature 1, for example, discloses a support beam which includes a plate-like body part extending along a predetermined direction, and a protruding part protruding from an intermediate portion of the body part in the predetermined direction, in an orthogonal direction orthogonal to the predetermined direction. In this support beam, the body part includes an axle housing support portion which is provided at the intermediate portion of the body part and used for supporting an axle housing, and a pair of suspension member connecting portions provided on one end portion and the other end portion of the body part in the predetermined direction and connected to a suspension member. The protruding part has a stabilizer member attaching portion to which the stabilizer member is attached. The stabilizer member attaching portion is continuous with the body part and forms a lump.

### Citation List

### Patent Literature

Patent Literature 1: Japanese Unexamined Patent Publication No. 2014-201147

### Summary of Invention

### Technical Problem

In a state in which the support beam as described above is mounted on the vehicle, the stabilizer member attaching portion is located in the vicinity of a brake part provided on the wheel. Therefore, there is a concern of interference of the stabilizer member attaching portion with the components of the brake part, for example, when detaching the brake part for maintenance or the like. In order to avoid this interference, it is conceivable to detach the support beam in advance before detaching the brake part, but it is necessary to detach the support beam each time the brake part is detached. Thus, workability of the removal work of the brake part is deteriorated. In particular, when an air disk brake is adopted for the brake part, the interference easily occurs between the stabilizer member attaching portion and a slide pin and a mounting bolt which are components of the air disk brake.

An object of an aspect of the present invention is to provide a support beam capable of suppressing interference between the stabilizer member attaching portion and the components of the brake part.

### Solution to Problem

A support beam according to an aspect of the present invention includes a body part extending along a predetermined direction, and a protruding part protruding from an intermediate portion of the body part in the predetermined direction, in an orthogonal direction orthogonal to the predetermined direction. The body part has an axle housing support portion provided at the intermediate portion of the body part and used for supporting an axle housing, and a pair of suspension member connecting portions provided at one end portion and the other end portion of the body part in the predetermined direction and to be connected to a suspension member. The protruding part has a stabilizer member attaching portion to which a stabilizer member is to be attached. The stabilizer member attaching portion includes a bottom wall portion continuous with the body part and extending along the predetermined direction, a side wall portion continuous with the bottom wall portion and extending along a direction orthogonal to both the predetermined direction and the orthogonal direction, and a top wall portion continuous with the side wall portion and extending to face the bottom wall portion.

In the support beam, the stabilizer member attaching portion includes the bottom wall portion continuous with the body part and extending along the predetermined direction, the side wall portion continuous with the bottom wall portion and extending along the direction orthogonal to both the predetermined direction and the orthogonal direction, and the top wall portion continuous with the side wall portion and extending to face the bottom wall portion. Thus, because the space is formed between the bottom wall portion and the top wall portion, it is possible to secure a space for releasing the components of the brake part when the brake part is detached. Therefore, according to the support beam, it is possible to suppress the interference between the stabilizer member attaching portion and the components of the brake part.

In the support beam according to an aspect of the present invention, the side wall portion and the top wall portion may be continuous with the body part. In this case, it is possible to increase the rigidity of the stabilizer member attaching portion, and thus to increase the rigidity of the entire support beam.

In the support beam according to an aspect of the present invention, the side wall portion may be provided with an opening in which a part of the stabilizer member is to be disposed. In this case, it is possible to dispose a part of the stabilizer member in the opening of the side wall portion, and attach the stabilizer member to the stabilizer member attaching portion.

### Advantageous Effects of Invention

According to an aspect of the present invention, it is possible to provide a support beam capable of suppressing the interference between the stabilizer member attaching portion and the components of the brake part.

### Brief Description of Drawings

FIG. 1(a) is a perspective view of a support beam of an embodiment as seen from one side in a predetermined direction, and FIG. 1(b) is a perspective view of the support beam as seen from the other side in the predetermined direction.
FIG. 2 is a diagram illustrating a positional relation between a stabilizer member attaching portion and a brake part.
FIG. 3(a) is a perspective view of a support beam of a comparative example as seen from one side in a predetermined direction, and FIG. 3(b) is a perspective view of the support beam of the comparative example as seen from the other side in the predetermined direction.

### Description of Embodiments

Hereinafter, an embodiment of the present invention will be described in detail with reference to the drawings. In the following description, the same reference numerals are used for the same or corresponding elements, and repeated explanations will not be provided.

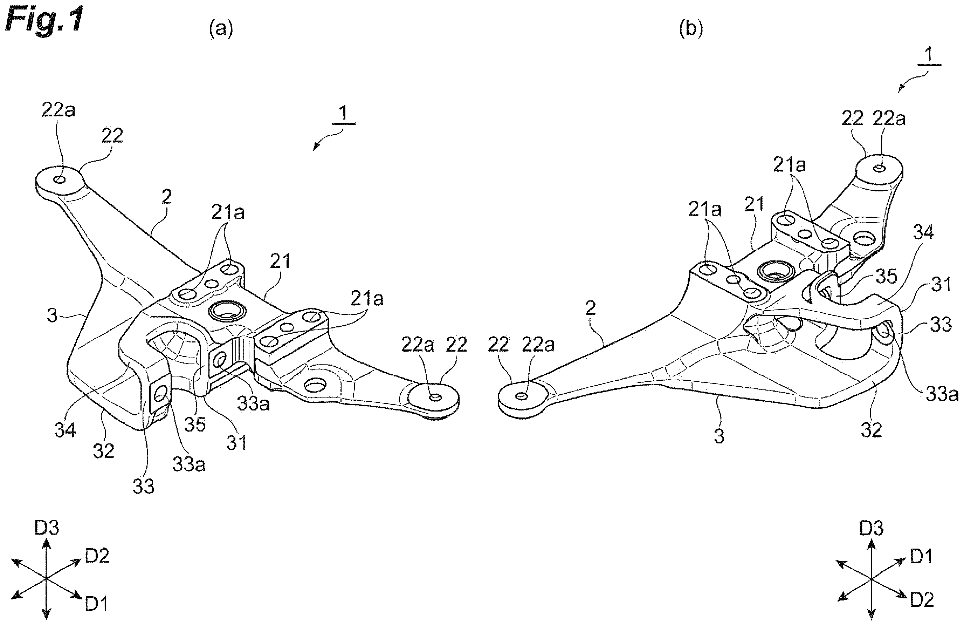

A support beam 1 illustrated in FIG. 1 is disposed in a rear wheel part of a vehicle such as a truck, and is used for supporting an axle housing. The axle housing is a shaft support member that holds an axle (here, a rear wheel shaft) in a freely rotatable manner. The support beam 1 includes a body part 2 extending along a predetermined direction D1, and a protruding part 3 protruding from an intermediate portion of the body part 2 in the predetermined direction D1, in an orthogonal direction D2 orthogonal to the predetermined direction D1. The support beam 1 is integrally formed of a metal, for example.

The body part 2 has an axle housing support portion 21 provided at an intermediate portion of the body part 2 in the predetermined direction D1, and a pair of suspension member connecting portions 22 provided at one end portion and the other end portion of the body part 2 in the predetermined direction D1. A portion of the body part 2 other than the axle housing support portion 21 has a plate shape.

The axle housing support portion 21 is a portion for supporting the axle housing. The axle housing support portion 21 is thicker than the other portions of the body part 2 so as to secure rigidity. For example, a screw hole 21a is provided in the axle housing support portion 21, and the axle housing is fixed to the axle housing support portion 21 by screwing a bolt into the screw hole 21a.

The suspension member connecting portion 22 is a portion to be connected to the suspension member. The suspension member is a member constituting the suspension mechanism of the vehicle, and is an air spring, for example. The suspension member connecting portion 22 has a substantially circular shape in a plan view (when viewed from a direction D3 orthogonal to both the predetermined direction D1 and the orthogonal direction D2), for example. Each of the suspension member connecting portions 22 is provided with a screw hole 22a, and the suspension member connecting portion 22 is connected to the suspension member by screwing the bolt into the screw hole 22a, for example.

The protruding part 3 extends in the predetermined direction D1 between the axle housing support portion 21 and an intermediate portion between the axle housing support portion 21 and one suspension member connecting portion 22. The protruding part 3 has a stabilizer member attaching portion 31 on a side of the other suspension member connecting portion 22 (one side in the predetermined direction D1). The stabilizer member is to be attached to the stabilizer member attaching portion 31. The stabilizer member is a member for suppressing rolling of the vehicle, and is a stabilizer that functions as both a stabilizer and a torque rod, for example.

The stabilizer member attaching portion 31 has a bottom wall portion 32, a side wall portion 33, and a top wall portion 34. The bottom wall portion 32 is continuous with the end portion of the axle housing support portion 21 in the orthogonal direction D2, and extends along the predetermined direction D1. The side wall portion 33 is continuous with the end portion of the bottom wall portion 32 in the predetermined direction D1, and extends along the direction D3. The top wall portion 34 is continuous with the end portion of the side wall portion 33 in the direction D3, and extends to face the bottom wall portion 32.

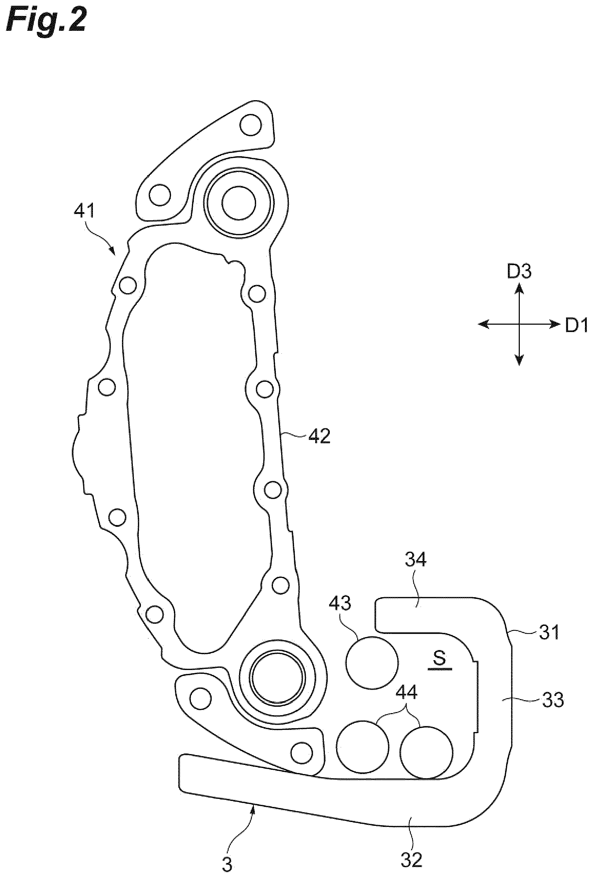

Each of the bottom wall portion 32, the side wall portion 33, and the top wall portion 34 has a substantially flat plate shape. The bottom wall portion 32 and the top wall portion 34 are substantially parallel to each other. A joining portion between the bottom wall portion 32 and the side wall portion 33, and a joining portion between the side wall portion 33 and the top wall portion 34 are curved. The whole of the bottom wall portion 32, the side wall portion 33, and the top wall portion 34 has a substantially C-shape (C-shape) when viewed in the orthogonal direction D2. A substantially rectangular parallelepiped space S (FIG. 2) is formed between the bottom wall portion 32 and the top wall portion 34. The side wall portion 33 and the top wall portion 34 are continuous with the body part 2. Specifically, the side wall portion 33 and the top wall portion 34 are continuous with the axle housing support portion 21 of the body part 2.

The side wall portion 33 is provided with an opening 35 in which the stabilizer member is to be disposed. In the present embodiment, the opening 35 is formed over the bottom wall portion 32, the side wall portion 33, and the top wall portion 34. The opening 35 has a substantially rectangular shape when viewed from the predetermined direction D1 and has a substantially rectangular shape in a plan view also.

A pair of screw holes 33a is provided in the side wall portion 33 to sandwich the opening 35, and the stabilizer member is attached to the stabilizer member attaching portion 31 by screwing the bolt into the screw hole 33a. In this attached state, for example, a bush portion of the stabilizer linker is inserted into the opening 35 from the other suspension member connecting portion 22 side and is disposed in the opening 35. In this attached state, the bush portion may protrude into the space S from the opening 35. The screw hole 33a penetrates the side wall portion 33 along the predetermined direction D1.

The support beam 1 is mounted on the vehicle in a posture in which the predetermined direction D1 is along a vehicle front-rear direction, the orthogonal direction D2 is along a vehicle width direction, and the direction D3 is along a vehicle vertical direction, for example. Specifically, in the mounted state, the bottom wall portion 32 is located on the lower side of the vehicle, and the top wall portion 34 is located on the upper side of the vehicle. In the mounted state the stabilizer member attaching portion 31 faces the brake part provided on the rear wheel in the vehicle width direction (the orthogonal direction D2), for example.

FIG. 2 is a view of the stabilizer member attaching portion 31 and the brake part 41 as seen from the orthogonal direction D2. The brake part 41 is, for example, an air disk brake mechanism, and has a brake body part 42 including a caliper (not illustrated), a slide pin 43 which slidably supports the caliper, and a mounting bolt 44 for fixing the brake body part 42 to the axle housing.

As illustrated in FIG. 2, at least a part of the slide pin 43 and the mounting bolt 44 overlaps the space S when viewed from the orthogonal direction D2. A part of the slide pin 43 and the mounting bolt 44 overlaps the space S in the plan view also. That is, a part of the slide pin 43 and the mounting bolt 44 is disposed in the space S. The slide pin 43 and the mounting bolt 44 may be disposed outside the space S in the plan view.

In the support beam 1 described above, the stabilizer member attaching portion 31 includes the bottom wall portion 32 continuous with the body part 2 and extending along the predetermined direction D1, the side wall portion 33 continuous with the bottom wall portion 32 and extending in the direction D3 orthogonal to both the predetermined direction D1 and the orthogonal direction D2, and the top wall portion 34 continuous with the side wall portion 33 and extending to face the bottom wall portion 32. Thus, because the space S is formed between the bottom wall portion 32 and the top wall portion 34, it is possible to secure a space for releasing the components of the brake part 41 when the brake part 41 is detached. Therefore, according to the support beam 1, it is possible to suppress the interference between the stabilizer member attaching portion 31 and the components of the brake part 41.

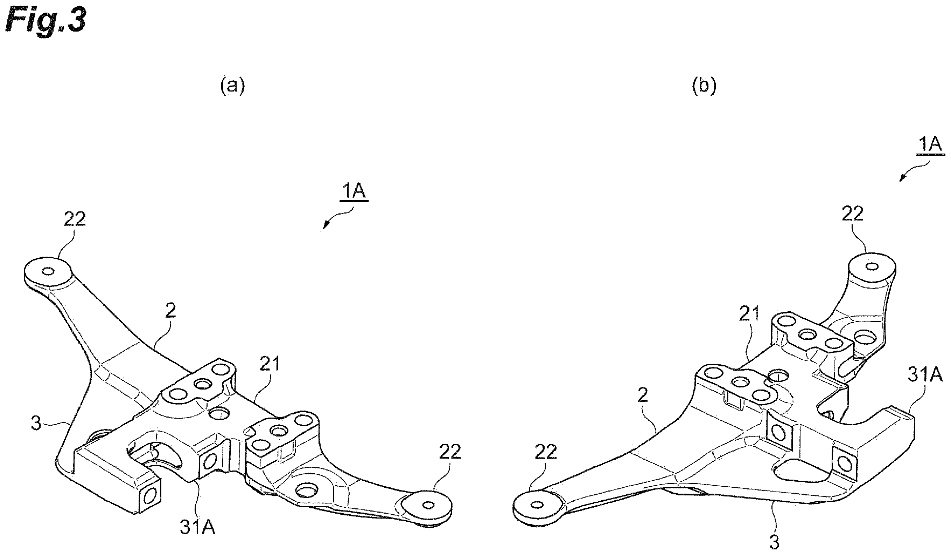

For example, in a case where a stabilizer member attaching portion 31A forms a lump as in the support beam 1A of the comparative example illustrated in FIG. 3, when the brake part 41 is detached, the stabilizer member attaching portion 31A interferes with the slide pin 43 and the mounting bolt 44 of the brake part 41. In contrast, in the support beam 1 of the above embodiment, because the slide pin 43 and the mounting bolt 44 can be released to the space S, it is possible to suppress the interference between the stabilizer member attaching portion 31 and the slide pin 43 and the mounting bolt 44. There may be a case where interference does not occur even in the stabilizer member attaching portion 31A of the comparative example depending on specifications of the brake part, like a case where a drum brake is adopted for the brake part of the vehicle. However, according to the support beam 1 of the above embodiment, it can be mounted on the vehicle with the same layout, regardless of the specification of the brake part.

Further, in the support beam 1, the side wall portion 33 and the top wall portion 34 are continuous with the body part 2. As a result, the rigidity of the stabilizer member attaching portion 31 can be enhanced, and thus the rigidity of the entire support beam 1 can be increased.

Further, in the support beam 1, the side wall portion 33 is provided with the opening 35 in which the stabilizer member is to be disposed. Accordingly, it is possible to dispose a part of the stabilizer member in the opening 35 of the side wall portion 33, and attach the stabilizer member to the stabilizer member attaching portion 31.

In addition, in the support beam 1, because the space S is formed between the bottom wall portion 32 and the top wall portion 34, weight can be reduced, as compared to a case where the stabilizer member attaching portion 31A forms a lump as in the comparative example of FIG. 3. Moreover, in the support beam 1, because the stabilizer member attaching portion 31 has the bottom wall portion 32, the side wall portion 33 and the top wall portion 34, it is possible to secure the strength of the stabilizer member attaching portion 31, while reducing the weight. Further, in the support beam 1, because the thickness of the stabilizer member attaching portion 31A in the predetermined direction D1 is thinner than that in the comparative example of FIG. 3, it is possible to shorten the bolt for attaching the stabilizer linker.

Although the embodiment of the present invention has been described above, the present invention is not limited to the above embodiment. For example, although the bottom wall portion 32 and the top wall portion 34 are substantially parallel to each other in the above-described embodiment, they may not necessarily be substantially parallel to each other as long as they face each other. Further, the expression "extending along the direction" as used in the present specification includes not only a case where the direction and the extending direction are completely parallel to each other, but also a case where the direction and the extending direction are substantially parallel to each other or a case where there is a certain degree of deviation between the direction and the extending direction. The side wall portion 33 and the top wall portion 34 may not be continuous with the body part 2. The opening 35 may not be provided in the side wall portion 33.

### Reference Signs List

1: support beam, 2: body part, 3: protruding part, 21: axle housing support portion, 22: suspension member connecting portion, 31: stabilizer member attaching portion, 32: bottom wall portion, 33: side wall portion, 34: top wall portion, 35: opening, 41: brake part, D1: predetermined direction, D2: orthogonal direction, D3: direction orthogonal to both predetermined direction and orthogonal direction.

## Claims

1. A support beam comprising:
a body part extending along a predetermined direction; and
a protruding part protruding from an intermediate portion of the body part in the predetermined direction, in an orthogonal direction orthogonal to the predetermined direction,
wherein the body part has
an axle housing support portion provided at the intermediate portion of the body part and used for supporting an axle housing, and
a pair of suspension member connecting portions provided at one end portion and the other end portion of the body part in the predetermined direction and to be connected to a suspension member,
the protruding part has a stabilizer member attaching portion to which a stabilizer member is to be attached,
the stabilizer member attaching portion includes
a bottom wall portion continuous with the body part and extending along the predetermined direction,
a side wall portion continuous with the bottom wall portion and extending along a direction orthogonal to both the predetermined direction and the orthogonal direction, and
a top wall portion continuous with the side wall portion and extending to face the bottom wall portion.

2. The support beam according to claim 1, wherein the side wall portion and the top wall portion are continuous with the body part.

3. The support beam according to claim 1 or 2, wherein the side wall portion is provided with an opening in which a part of the stabilizer member is to be disposed.
